# EUROPÄISCHE PATENTSCHRIFT

(11) **EP 0 398 138 B1**
(45) Veröffentlichungstag und Bekanntmachung des Hinweises auf die Patenterteilung: **21.04.1993**
(21) Anmeldenummer: 90108695.9
(22) Anmeldetag: 09.05.1990
(51) Int. Cl.: F02B 41/10, F02G 5/02, F01D 17/26, F02C 9/16

(54) **Vorrichtung zur Steuerung einer mit einem Generator gekoppelten Nutzturbine**
Device for controlling a power turbine coupled with a generator
Dispositif pour commander une turbine de puissance couplée à un générateur

(30) Priorität: 18.05.1989 DE 3916242
(43) Veröffentlichungstag der Anmeldung: 22.11.1990
(73) Patentinhaber: MAN B & W Diesel Aktiengesellschaft, 86135 Augsburg (DE)
(72) Erfinder: Bucher, Jakob, D-8903 Bobingen (DE)

(56) Entgegenhaltungen:
- DE-A- 3 705 310
- DE-C- 3 729 117

## Beschreibung

Die Erfindung betrifft eine Vorrichtung zur Steuerung einer mit einem Generator gekoppelten Nutzturbine, die für die Aufladung nicht benötigtes Abgas einer aufgeladenen Brennkraftmaschine verwertet, gemäß dem Oberbegriff des Patentanspruchs 1.

Aus der DE-A-37 05 310 ist eine gattungsgemäße Vorrichtung bekannt. Eine Nutzturbine treibt dort einen Synchrongenerator, der die erzeugte elektrische Leistung in ein Netz einspeist. Der Antrieb des Generators durch die Turbine erfolgt erst nach Erreichen der Synchrondrehzahl des Generators; zum Hochfahren auf die Synchrondrehzahl ist dort ein spezieller Asynchron-Anwurfmotor erforderlich.

Der Erfindung liegt die Aufgabe zugrunde, eine Vorrichtung zur Steuerung einer Nutzturbine zu schalten, bei der der Generator unmittelbar von der mit ihm gekoppelten Turbine hochgefahren wird.

Diese Aufgabe wird durch die Merkmale im kennzeichnenden Teil des Patentanspruchs 1 gelöst. Die erfindungsgemäße Vorrichtung bringt folgende Vorteile:
In Abhängigkeit von dem vor der Turbine anstehenden Druck als Steuergröße erfolgt das Hochfahren des Generators auf einer Beschleunigungskurve mit degressiver Kennlinie. Im Bereich der Nenndrehzahl des Generators ist dabei der Drehzahlanstieg derart gering, daß dessen sicheres Zuschalten gewährleistet ist. Eine stoßartige Belastung des Netzes wird wirksam vermieden. Druckschwankungen in der Abgaszufuhrleitung werden selbsttätig ausgeregelt.

Vorteilhafte Ausgestaltungen der Erfindung sind den Unteransprüchen zu entnehmen.

Es zeigt
- Fig. 1: ein Leistungs/Drehzahl-Diagramm einer Asynchronmaschine,
- Fig. 2: eine erfindungsgemäße Vorrichtung in der Startphase,
- Fig. 3: eine erfindungsgemäße Vorrichtung in der Beschleunigungsphase,
- Fig. 4: eine erfindungsgemäße Vorrichtung bei der Überdruckregelung in der Beschleunigungsphase,
- Fig. 5: eine erfindungsgemäße Vorrichtung in der Betriebsphase,
- Fig. 6 a-c: ein Diagramm für Turbinendrehzahl, Druck vor Turbine und Öffnung des zweiten Absperrorgans während verschiedener Betriebsphasen.

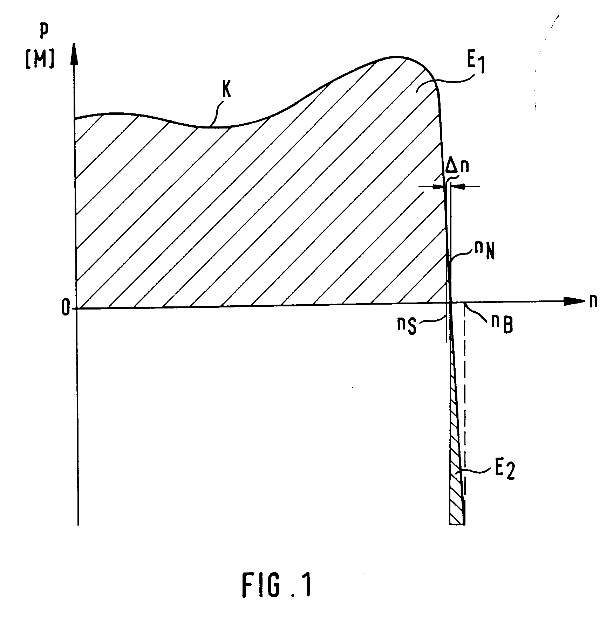

In Fig. 1 ist eine Kennlinie K einer als Käfigläufer ausgebildeten Asynchronmaschine dargestellt. Anhand dieser Kennlinie K soll zunächst kurz die Problematik des Anfahrens und Zuschaltens einer solchen Maschine an ein Netz betrachtet werden. Über der Drehzahl n (Abszisse) sind als Ordinatenwerte die Leistung P bzw. das dazu proportionale Moment M aufgetragen. Ein Hochfahren der Maschine als Motor von einer Drehzahl n = 0 auf eine Nenndrehzahl n_{N}, die sich aus Netzfrequenz und Polpaarzahl ergibt, würde entsprechend der dafür benötigten Zeitdauer dem Netz eine Energiemenge E₁ entnehmen, die zur rechtssteigend schraffierten Fläche E₁ proportional ist. Eine solche Entnahme bedeutet insbesondere für kleinere elektrische Netze, wie das Bordnetz eines Schiffes, einen gewaltigen Leistungseinbruch.

Ein Hochfahren der Maschine ohne deren Kopplung ans Netz mittels einer Arbeitsmaschine und das anschließende Zuschalten ans Netz stellen aufgrund der Steilheit der Kennlinie K im Bereich der Nenndrehzahl n_{N} hohe Anforderungen an eine Vorrichtung zur Steuerung dieses Vorgangs. Fig. 1 verdeutlicht, wie schmal der Bereich Δ n zwischen einer Schaltdrehzahl n_{S}, bei der die Maschine ans Netz geschaltet wird, und der Nenndrehzahl n_{N} ist, wenn eine stoßhafte Belastung des Netzes vermieden werden soll.

Bei einer Überschreitung der Nenndrehzahl n_{N} in Richtung zur Betriebsdrehzahl n_{B} arbeitet die Asynchronmaschine als Generator und gibt (im Feld E2 der Fig. 1) Leistung ans Netz ab.

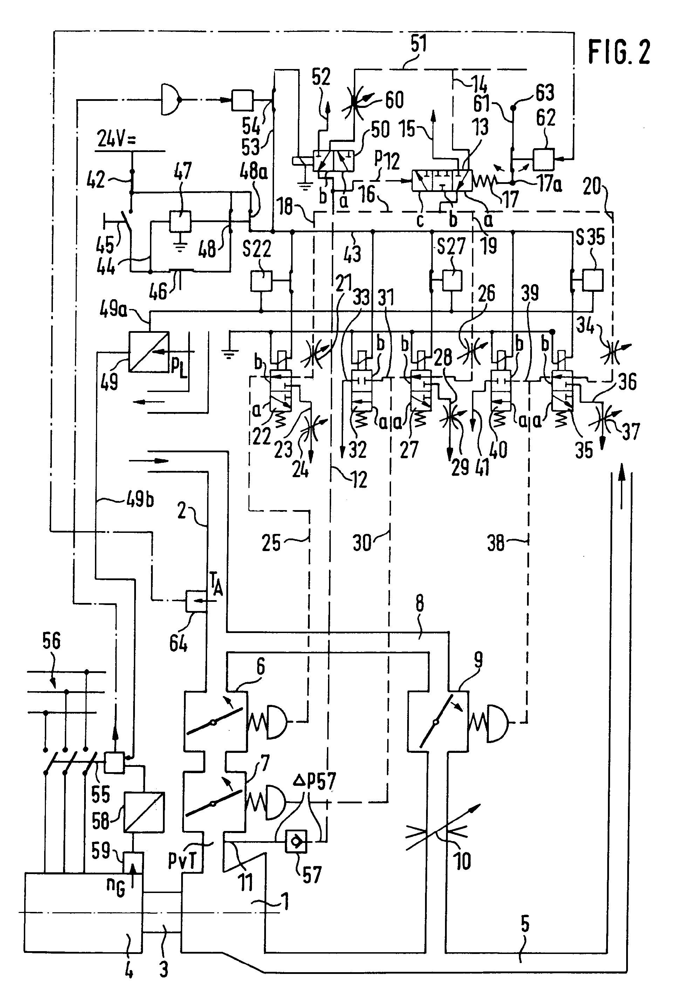

Die nachfolgend beschriebene Vorrichtung zur Steuerung einer mit einem Generator gekoppelten Nutzturbine verwendet die Nutzturbine unmittelbar zum Hochfahren eines mit ihr gekoppelten Asynchrongenerators. In den Fig. 2 bis 5 ist schematisch eine Nutzturbine 1 dargestellt, der über eine Abgaszufuhrleitung 2 für die Aufladung einer nicht dargestellten aufgeladenen Brennkraftmaschine nicht benötigtes Abgas zugeführt wird. Die Nutzturbine 1 ist über ein Getriebe 3 mit einem Asynchrongenerator 4 gekoppelt. Die in der Nutzturbine 1 entspannten Gase werden über eine Abgasabfuhrleitung 5 ins Freie geleitet.

In der Abgaszufuhrleitung 2 ist wenigstens ein Absperrorgan 6 angeordnet. In einer bevorzugten Ausführungsform sind jedoch - wie dargestellt - zwei Absperrorgane 6 und 7 in Reihe hintereinander angeordnet, von denen wenigstens eines bezüglich seiner Öffnungsstellung sehr fein regelbar und wenigstens eines schnell schließbar ist. So ist im Ausführungsbeispiel das Absperrorgan 6 sehr fein regelbar und das Absperrorgan 7 ist schnell schließbar. Diese Anordnung ermöglicht eine sehr feine Regulierung der zur Nutzturbine 1 durchfließenden Abgasmenge bei gleichzeitiger schneller Schließbarkeit, wenn diese in einem Störungsfall erforderlich werden sollte. Beide Absperrorgane 6 und 7 werden mittels Druckluft betätigt und sind in entlüfteter Grundstellung geschlossen.

Vor den Absperrorganen 6, 7 zweigt von der Abgaszufuhrleitung 2 eine Bypass-Leitung 8 ab, die die Nutzturbine 1 umgeht und hinter dieser in die Abgasabfuhrleitung 5 einmündet. In der Bypass-Leitung 8 ist ein Bypass-Ventil 9 angeordnet, das mittels Duckluft betätigbar und in entlüfteter Grundstellung geöffnet ist. Ferner ist in der Bypass-Leitung 8 eine vorzugsweise einstellbare Drossel 10 angeordnet. Diese hat die Aufgabe, bei nicht im Betrieb befindlicher Nutzturbine ein Druckgefälle zu erzeugen, das etwa dem der Nutzturbine entspricht. Dadurch besteht für die Brennkraftmaschine - unabhängig vom Betrieb der Nutzturbine - ein annähernd konstanter Abgasgegendruck.

An die Abgaszufuhrleitung 2 ist unmittelbar vor deren Eintritt zur Nutzturbine 1 ein Druckmesser 11 angeschlossen, der den Druck vor Turbine p_{vT} ermittelt. Gemäß der Erfindung wird der Druck vor Turbine p_{vT} als Steuergröße des Absperrorgans 6 (bzw. der Absperrorgane 6 und 7) an einer Vorrichtung zur Regelung des Öffnungsquerschnittes des Absperrorgans 6 (bzw. der Absperrorgane 6 und 7) und des Bypass-Ventils 9 verwendet, welche den Öffnungsquerschnitt des Absperrorgans 6 derart steuert, daß dieser in einer ersten Phase beim Anfahren der Nutzturbine 1 zunächst solange kontinuierlich vergrößert wird, bis der Druck p_{vT} einen vorgewählten, einstellbaren Druck p_{S} erreicht hat.

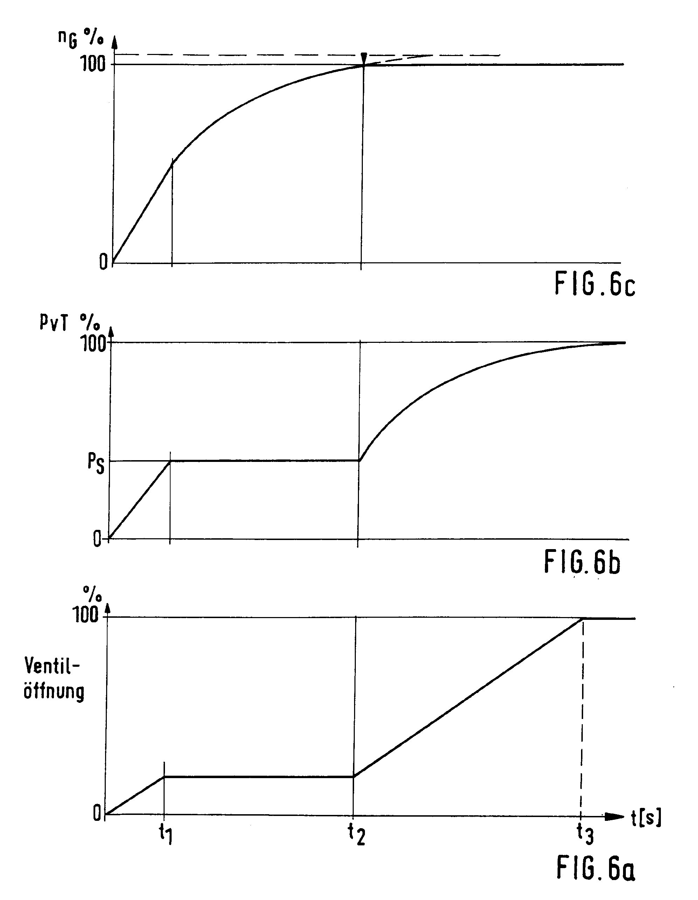

Dieser Vorgang ist im Diagramm gemäß Fig. 6 b durch die ansteigende Gerade im linken Teil dargestellt, bei der die Ventilöffnung in einem Zeitintervall von 0 bis t₁ von 0 auf etwa 20 % ansteigt. Damit einher gehen ein Anstieg des Druckes p_{vT} von 0 bis p_{S}, wie in Fig. 6 b dargestellt, und ein Anstieg der Generatordrehzahl von 0 auf ca. 50 % der Nenndrehzahl n_{N}.

In dieser Stellung verharrt das Absperrorgan 6 während des Zeitintervalls von t₁ bis t₂, dargestellt durch den waagerechten Verlauf der Ventilöffnungs-Kurve in Fig. 6 a. Bei gleicher zur Verfügung stehender Abgasmenge bleibt auch der Druck p_{vT} während dieser Zeit auf dem Niveau p_{S}. Der Druck p_{S} ist so gewählt, daß bei der niedrigsten Leistung der Brennkraftmaschine, bei der die Nutzturbine 1 zugeschaltet wird, der Asynchrongenerator 4 im Falle seiner Nichteinschaltung ans Netz auf eine Drehzahl n ₘₐₓ beschleunigt würde, die um etwa 5 % über seiner Nenndrehzahl n_{N} liegt. In Fig. 6 c ist der degressive Verlauf der Drehzahlkurve des Asynchrongenerators 4 im Zeitintervall t₁ - t₂ dargestellt; der Drehzahlanstieg dn/dt erreicht dabei im Bereich der Nenndrehzahl n_{N} einen so geringen Wert, daß ein sicheres, stoßfreies Zuschalten des Asynchrongenerators 4 ans Netz im Zeitpunkt t₂ gewährleistet ist.

Nach dem Zuschalten ans Netz wird im Zeitintervall t₂ - t₃ das Absperrorgan 6 weiter kontinuierlich bis auf 100 % geöffnet (Fig. 6 a). Dabei steigt der Druck p_{vT} ebenfalls bis auf einen Maximalwert an (Fig. 6 b). Die Drehzahl des nunmehr von der Last des Netzes beaufschlagten Asynchrongenerators 4 bleibt dabei weitestgehend konstant; eine geringfügige Erhöhung (Schlupf) der Betriebsdrehzahl n_{B} gegenüber der Nenndrehzahl n_{N} ist - wie im Zusammenhang mit Fig. 1 erläutert - für eine Energieabgabe ans Netz erforderlich.

Prinzipiell bieten sich dem Fachmann verschiedene Möglichkeiten zur Realisierung einer erfingungsgemäßen Vorrichtung zur Regelung des Öffnungsquerschnittes des Absperrorgans 6 (bzw. der Absperrorgane 6, 7).

So können beispielsweise die Drücke p_{vT} und p_{L} sowie die Generator-Drehzahl n_{G} als elektrische Eingangssignale einem Rechner zugeführt werden, der aufgrund gespeicherter Sollwerte mittels eines Rechenprogramms digitale Ausgangsimpulse zur Ansteuerung von elektrischen Stellmotoren erzeugt, wobei letztere als Schrittschaltmotoren die Stellung der Absperrorgane 6, 7 und des Bypass-Ventils 9 regeln und gekoppelt mit einem Leistungsschalter die Zu- und Abschaltung des Asynchrongenerators 4 ans Netz steuern.

In einer im Ausführungsbeispiel dargestellten vorteilhaften Ausführungsform ist der Druckmesser 11 als Staudruckleitung 12 ausgebildet. Der in der Staudruckleitung 12 anstehende Druck wird hierbei unmittelbar als Steuergröße für ein als 3/3-Wegeventil ausgebildetes Vorschalt-Wegeventil 13 verwendet. Für die Wegeventile werden die nach DIN 24 300 üblichen Bezeichnungen verwendet. Das 3/3-Wegeventil weist demnach drei gesteuerte Anschlüsse und drei Schaltstellungen auf. Am Vorschaltwegeventil 13 liegt eingangsseitig eine Druckluft-Speiseleitung 14 an, die mit einer nicht dargestellten Druckluftquelle verbunden ist und liegen ausgangsseitig eine Entlüftungsleitung 15 und eine Sammeldruckleitung 16 als weitere gesteuerte Anschlüsse an. Die drei Schaltstellungen 13 a, b, c des Vorschalt-Wegeventils 13, aufgezählt in der Reihenfolge, die sie bei steigendem Druck in der Staudruckleitung 12 gegen die Rückstellkraft einer Feder 17 einnehmen, sind:
13 a Druckluftspeiseleitung 14 mit der Sammeldruckleitung 16 verbunden,
13 b alle gesteuerten Anschlüsse gesperrt und
13 c Sammeldruckleitung 16 mit der Entlüftungsleitung 15 verbunden.

Die Sammeldruckleitung 16 teilt sich in drei Zweigleitungen 18, 19, 20 auf.

Die erste Zweigleitung 18 weist eine vorzugsweise einstellbare Drossel 21 auf und ist eingangsseitig an ein erstes elektromagnetisch schaltbares 3/2-Wegeventil 22 angeschlossen. Als weitere Anschlüsse liegen an dem 3/2-Wegeventil 22 eine Entlüftungsleitung 23, in die eine vorzugsweise einstellbare Drossel 24 eingebaut ist, und eine Steuerleitung 25, die mit dem Absperrorgan 6 verbunden ist. Das Absperrorgan 6 wird durch eine Feder in Grundstellung in Schließposition gehalten und durch den in der Steuerleitung 25 anstehenden Druck in Öffnungsrichtung beaufschlagt.

Die zweite Zweigleitung 19 weist eine vorzugsweise einstellbare Drossel 26 auf und ist eingangsseitig an ein zweites elektromagnetisch schaltbares 3/2-Wegeventil 27 angeschlossen. Als weitere Anschlüsse liegen an dem 3/2-Wegeventil 27 eine Entlüftungsleitung 28, in die eine vorzugsweise einstellbare Drossel 29 eingebaut ist, und eine Steuerleitung 30, die mit dem Absperrorgan 7 verbunden ist. Das Absperrorgan 7 wird durch eine Feder in Grundstellung in Schließposition gehalten und durch den in der Steuerleitung 30 anstehenden Druck in Öffnungsrichtung beaufschlagt. Da das Absperrorgan 7 im Notfall schnell schließen soll, ist in einer Abzweigung 31 der Steuerleitung 30 ein zusätzliches 2/2-Wegeventil 32 vorgesehen, das in Betriebsstellung 32 b die Abzweigung 31 verschließt und diese in der zweiten Schaltstellung 32 a bei Auslösung eines Notstops mit einer ungedrosselt ins Freie führenden Entlüftungsleitung 33 verbindet.

Die dritte Zweigleitung 20 weist eine vorzugsweise einstellbare Drossel 34 auf und ist eingangsseitig an ein drittes elektromagnetisch schaltbares 3/2-Wegeventil 35 angeschlossen. Als weitere Anschlüsse liegen an dem 3/2-Wegeventil 35 eine Entlüftungsleitung 36, in die eine vorzugsweise einstellbare Drossel 37 eingebaut ist und eine Steuerleitung 38, die mit dem Bypass-Ventil 9 verbunden ist. Das Bypass-Ventil 9 wird durch eine Feder in Grundstellung in Öffnungsposition gehalten und durch den in der Steuerleitung 38 anstehenden Druck in Schließrichtung beaufschlagt. Da das Bypass-Ventil 9 im Notfall schnell öffnen soll, ist in einer Abzweigung 39 der Steuerleitung 38 ein zusätzliches 2/2-Wegeventil 40 vorgesehen, das in Betriebsstellung 40 b die Abzweigung 39 verschließt und diese in der zweiten Schaltstellung 40 a bei Auslösung eines Notstops mit einer ungedrosselt ins Freie führenden Entlüftungsleitung 41 verbindet.

Die Magnetschalter der Wegeventile 22, 27, 32, 35 und 40 sind parallel zueinander in einem elektrischen Steuerkreis 43 angeordnet. Sie werden von einer 24 V Steuerspannung betätigt, die nach Schließen eines Hauptschalters 42, Betätigung eines den Steuerkreis 43 und gleichzeitig eine Halteschaltung 44 aktivierenden Starttasters 45 sowie bei den Wegeventilen 22, 27 und 35 zusätzlich nach Schließung eines Betriebsschalters S₂₂, S₂₇ bzw. S₃₅ an einer ihrer beiden Anschlußklemmen anliegt. Die zweite Anschlußklemme der Magnetschalter liegt an Masse. Bei anliegender Steuerspannung bewirken die Magnetschalter, daß die Wegeventile 22, 27, 32, 35 und 40 folgende Schaltpositionen einnehmen: Am Wegeventil 22 ist die erste Zweigleitung 18 mit der Steuerleitung 25 verbunden (Schaltpositionen 22b). Am Wegeventil 27 ist die zweite Zweigleitung 19 mit der Steuerleitung 30 verbunden (Schaltposition 27 b); das Wegeventil 32 versperrt die Abzweigung 31 (Schaltposition 32 b).

Am Wegeventil 35 ist die dritte Zweigleitung 20 mit der Steuerleitung 38 verbunden (Schaltposition 35 b); das Wegeventil 40 sperrt die Abzweigung 39 (Schaltposition 40 b).

Die den Magnetschaltern der Wegeventile 22, 27 und 35 vorgeschalteten Betriebsschalter S₂₂, S₂₇ und S₃₅ werden von einem Steuergerät 49 betätigt. Dem Steuergerät 49 wird als Eingangssignal beispielsweise ein zum Ladedruck p_{L} proportionaler Wert zugeführt. Ist dieser genügend hoch, erfolgt über eine Signalleitung 49 a eine Schließung der Schalter und die Nutzturbine 1 wird mit überschüssigem Abgas beaufschlagt. Fällt der Wert des Ladedruckes p_{L} unter einen einstellbaren Mindestwert p_{LÜ}, werden die Schalter S₂₂, S₂₇ und S₃₅ geöffnet und die Nutzturbine 1 dadurch außer Betrieb gesetzt.

In die Halteschaltung 44 ist ein Notstop-Schalter 46 eingeschaltet, der in Grundstellung geschlossen ist und dafür sorgt, daß der Haltestrom an einem Schaltrelais 47, das einen Schalter 48 für die Halteschaltung und einen Schalter 48 a für den Steuerkreis 43 betätigt, aufrechterhalten bleibt.

Bei geöffnetem Notstop-Schalter 46, d.h. bei Vorliegen einer Betriebsstörung, fällt das Schaltrelais 47 ab und öffnet somit die Schalter 48 und 48 a. Bei geöffnetem Schalter 48 a liegt - unabhängig von der Stellung der Betriebsschalter S₂₂, S₂₇ und S₃₅ - keine Steuerspannung mehr an den Magnetschaltern der Wegeventile 22, 27, 32, 35 und 40 an, wodurch diese federbelastet in ihre jeweils mit dem Zusatz "a" bezeichnete zweite Schaltposition geraten. In dieser verbindet das Wegeventil 22 die Steuerleitung 25 mit der Entlüftungsleitung 23; gleichzeitig wird die erste Zweigleitung 18 gesperrt. Das Wegeventil 27 verbindet die Steuerleitung 30 mit der Entlüftungsleitung 28 und sperrt gleichzeitig die zweite Zweigleitung 19; das Wegeventil 32 verbindet zusätzlich die Abzweigung 31 mit der Entlüftungsleitung 33.

Das Wegeventil 35 verbindet die Steuerleitung 38 mit der Entlüftungsleitung 36 und sperrt gleichzeitig die dritte Zweigleitung 20; das Wegeventil 40 verbindet zusätzlich die Abzweigung 39 mit der Entlüftungsleitung 41.

In einer vorteilhaften Ausgestaltung der Erfindung erfolgt die Messung des Druckes p_{vT} nicht unmittelbar durch das in der Abgaszufuhrleitung 2 anstehende Abgas, sondern indirekt durch Steuerluft. Das hat den Vorteil, daß ein Druckmesser oder im vorliegenden Beispiel das in die Staudruckleitung 12 eingeschaltete Vorschaltwegeventil 13 nicht unmittelbar dem heißen, aggressiven Medium Abgas ausgesetzt sind. Zu diesem Zweck ist die Staudruckleitung 12 mittels eines elektromagnetisch betätigbaren 3/2-Wegeventils 50 und unter Zwischenschaltung einer einstellbaren Drossel 60 an eine Steuerluft-Speiseleitung 51 anschließbar, die vorteilhafterweise mit der Steuerluft-Speiseleitung 14 von einer gemeinsamen Druckluftquelle gespeist wird. Das 3/2-Wegeventil 50 weist als dritten gesteuerten Anschluß eine Entlüftungsleitung 52 auf.

In der ersten Schaltstellung 50 b verbindet das Wegeventil 50 die Steuerluft-Speiseleitung 51 mit der Staudruckleitung 12, in der zweiten Schaltstellung 50 a die Staudruckleitung 12 mit der Entlüftungsleitung 52. Das Wegeventil 50 wird durch einen Magnetschalter betätigt. Dieser liegt in einem abzweigenden Strang 53 des elektrischen Steuerkreises 43. Dem Magnetschalter des Wegeventils 50 ist ein Hilfsschalter 54 vorgeschaltet. Der Hilfsschalter 54 ist ein invertierender Schalter eines Netzschalters 55, der den Asynchrongenerator 4 an ein elektrisches Verbrauchernetz 56 zu- oder von diesem abschaltet. Durch die Invertierung ist der Schalter 54 geschlossen, wenn der Hauptschalter 55 geöffnet ist und umgekehrt.

Bei geschlossenem Hilfsschalter 54 (d.h. geöffnetem Netzschalter 55) und einer im Steuerkreis 43 anliegenden Spannung nimmt das Wegeventil 50 die erste Schaltstellung 50 b ein, in der Steuerluft-Speiseleitung 51 und Staudruckleitung 12 miteinander verbunden sind. Dabei strömt Steuerluft, deren Druckniveau stets über dem größtmöglichen Druck vor Turbine p_{vT} liegt, über ein in die Staudruckleitung 12 eingeschaltetes Rückschlagventil 57 zur Abgaszufuhrleitung 2. Das Rückschlagventil 57 ist kurz vor der Einmündung der Staudruckleitung 12 in die Abgaszufuhrleitung 2 angeordnet und nur nach dorthin durchlässig, so daß ein Eindringen von Abgas verhindert wird. Der in der Staudruckleitung 12 zwischen dem Wegeventil 50 und dem Rückschlagventil 57 anstehende Druck p₁₂, der als Stellgröße für das Vorschalt-Wegeventil 13 maßgeblich ist, entspricht dabei dem Druck p_{vT} zuzüglich dem geringen Druckabfall Δ p₅₇ am Rückschlagventil 57. Somit wird das Vorschalt-Wegeventil 13 von sauberer Druckluft betätigt, wobei deren Druck p₁₂ jedoch proportional zum Druck p_{vT} des Abgases ist.

Der bereits erwähnte Netzschalter 55 des Asynchrongenerators 4 wird von einer Schaltlogik 58 betätigt, die eingangs mit einem Drehzahlaufnehmer 59 verbunden ist. Der Drehzahlaufnehmer 59 ermittelt die aktuelle Drehzahl n_{G} des Asynchrongenerators 4. Die Schaltlogik 58 speichert einen Drehzahl-Sollwert n_{S}, der annähernd der Nenndrehzahl n_{N} des Asynchrongenerators 4 entspricht. Der vom Drehzahlaufnehmer 59 eingehende Drehzahl-Istwert n_{G} wird ständig mit diesem Sollwert n_{S} verglichen. Hat die Istdrehzahl n_{G} beim Hochfahren den Sollwert n_{S} erreicht, so wird der Netzschalter 55 geschlossen. Wenn ein fallender Ladedruck p_{L} ein Abfallen der Generatordrehzahl n_{G} in einen Bereich erwarten läßt, in dem dieser nicht mehr als Generator, sondern als Motor arbeiten würde, bewirkt das Steuergerät 49 über eine Signalleitung 49 b ein Öffnen des Netzschalters 55.

Nachfolgend wird die Funktion der vorstehend beschriebenen Bauteile während verschiedener Betriebsphasen im Zusammenhang dargestellt, soweit dies nicht schon bei deren Detail-Beschreibung geschehen ist.

Fig. 2 stellt die Startphase dar und geht von folgendem Grundzustand aus: Die Brennkraftmaschine ist in Betrieb und liefert eine bestimmte Abgasmenge, die für einen Betrieb des Generators ausreicht. Der Notstop-Schalter 46 ist geschlossen. Der Turbinen-Hauptschalter 42 wurde manuell geschlossen und dadurch die grundsätzliche Betriebsbereitschaft der Nutzturbine 1 und des Asynchrongenerators 4 bestätigt. Der Starttaster 45 wurde betätigt; mit der dadurch bewirkten Schließung der Schalter 48 für die Halteschaltung und 48 a für den elektrischen Steuerkreis 43 ist die Startbereitschaft der Nutzturbinen/Generatoranlage hergestellt. Der Wegeventile 32 und 40 sind in Stellung "b" gegangen und versperren die Entlüftung der Abzweiungen 31 bzw. 39. Über den abzweigenden Strang 53 des elektrischen Steuerkreises 43 und den geschlossenen Hilfsschalter 54 des Netzschalters 55 wird das Wegeventil 50 in die Stellung "b" bewegt. Dadurch strömt Steuerluft über die Drossel 60 in die Staudruckleitung 12.

Der Ladedruck p_{L} hat als Eingangsgröße des Steuergerätes 49 den Wert P_{LÜ} erreicht, der eine Schließung der Schalter S₂₂, S₂₇ und S₃₅ auslöst. Durch die Schließung dieser Schalter ziehen die Magnete der Wegeventile 22, 27, 35 an und bringen diese in die Schaltposition "b". Dies führt dazu, daß die Steuerleitung 25 mit der Zweigleitung 18, die Steuerleitung 30 mit der Zweigleitung 19 und die Steuerleitung 38 mit der Zweigleitung 20 verbunden wird. Die Absperrorgane 6 und 7 werden mit Steuerluft beaufschlagt und öffnen langsam; das ebenfalls mit Steuerluft beaufschlagte Bypass-Ventil 9 schließt langsam. Dadurch wird ein wachsender Anteil von Abgas über die Absperrorgane 6 und 7 zur Nutzturbine 1 geleitet, während gleichzeitig der Abgasstrom in der Bypass-Leitung 8 verringert wird.

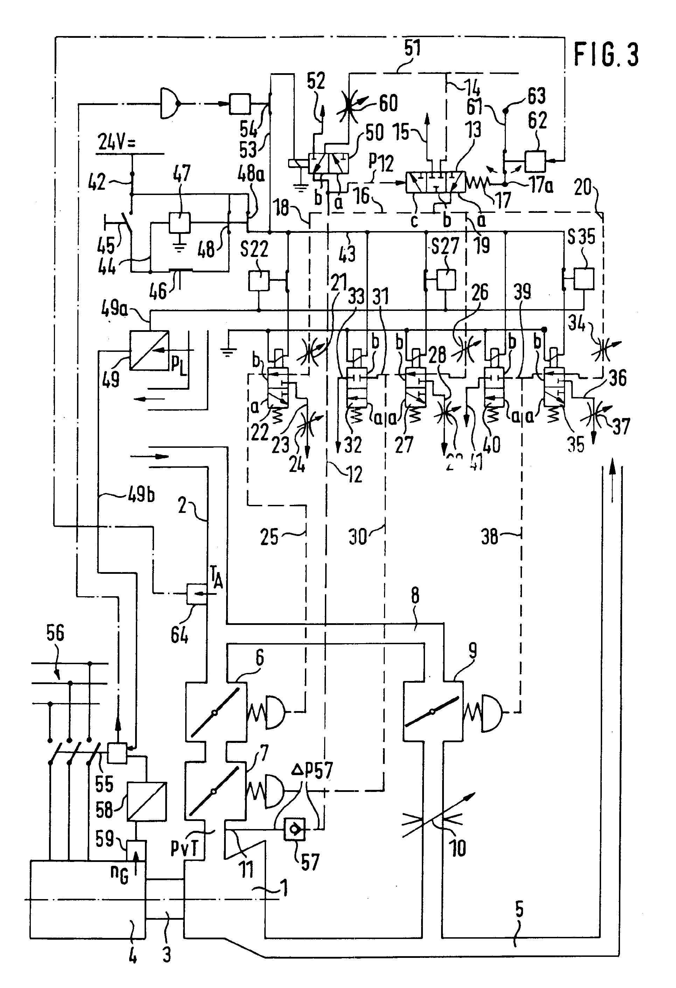

Wenn der Druck vor der Nutzturbine p_{vT} einen Schalt-Druck p_{S} ereicht hat, der über die Feder 17 am Vorschalt-Wegeventil 13 voreinstellbar ist, wird das Vorschalt-Wegeventil 13 durch den in der Staudruckleitung 12 anstehenden Druck in die Schaltposition "b" gedrückt. Damit wird die Zufuhr von Steuerluft aus der Steuerluft-Speiseleitung 14 zur Sammeldruckleitung 16 unterbunden; die Absperrorgane 6 und 7 sowie das Bypass-Ventil 9 verharren in einer Zwischenstellung, die in Fig. 3 gezeigt ist. In dieser Zwischenstellung ist der Druck p_{vT} gerade so hoch, daß er für eine Beschleunigung der Nutzturbine 1 und des Asynchrongenerators 4 ausreicht, dabei jedoch im Bereich der Nenndrehzahl n_{N} des Asynchrongenerators 4 nur noch einen so geringen Drehzahlanstieg bewirkt, daß ein sicheres, stoßfreies Zuschalten an das elektrische Verbrauchernetz 56 gewährleistet ist.

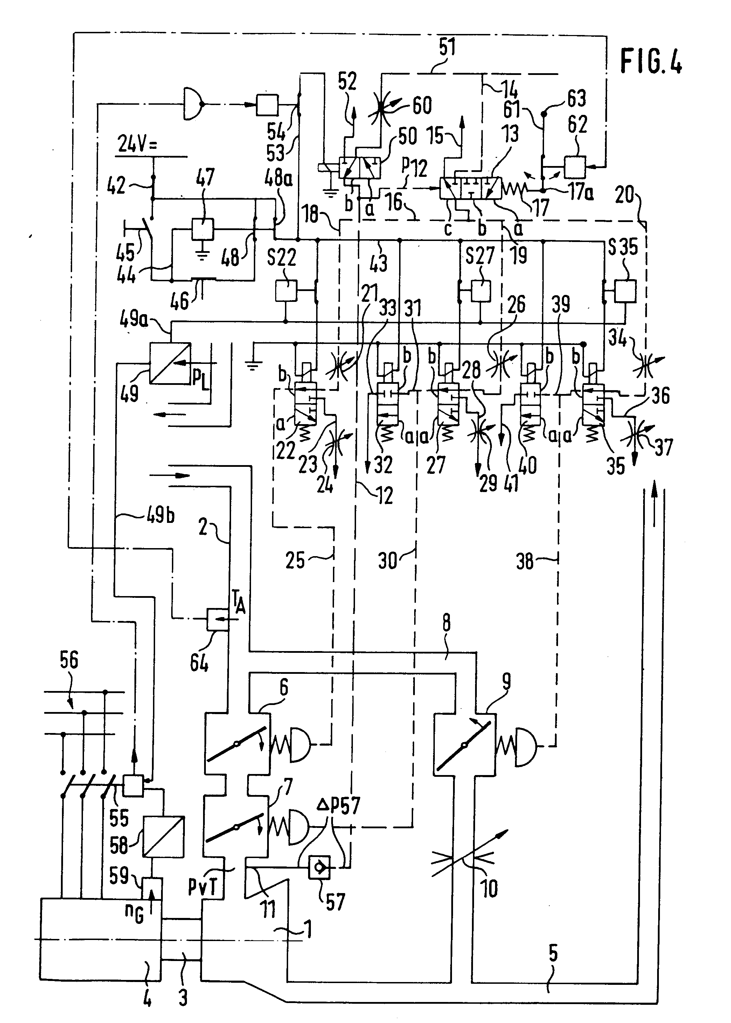

Sollte während dieser Beschleunigungsphase der Nutzturbine 1 und des Asynchrongenerators 4 aufgrund einer weiteren Leistungssteigerung der das Abgas liefernden Brennkraftmaschine der Druck p_{vT} über den Druck p_{S} ansteigen, so wird die in Fig. 4 dargestellte Überdruck-Absteuerung wirksam. Durch den erhöhten Druck in der Staudruckleitung 12 wird das Vorschalt-Wegeventil 13 in seine Schaltposition 13 c gedrückt. Dabei wird die Sammeldruckleitung 16 mit der Entlüftungsleitung 15 verbunden. Der dadurch erfolgende Druckabbau in den Steuerleitungen 25, 30 und 38 bewirkt eine langsame Schließung der Absperrorgane 6 und 7 bei gleichzeitiger langsamer Öffnung des Bypass-Ventils 9. Dadurch wird der Druck vor Turbine p_{vT} wieder auf das Niveau p_{S} zurückgefahren, das für das ordungsgemäße Beschleunigen und Zuschalten erforderlich ist. Ist der Überdruck entspechend zurückgefahren, sinkt auch der Druck in der Staudruckleitung 12 wieder und gestattet dem Vorschalt-Wegeventil 13 eine Rückkehr in die Schaltposition "b". Ein noch weiterer Druckabfall in der Staudruckleitung 12 würde durch die Rückkehr in die Schaltposition 13 a zu einer weiteren Zufuhr von Steuerluft zu den Steuerleitungen 18, 19, 20 und somit zu einem weiteren Öffnen der Absperrorgane 6 und 7, bzw. einem weiteren Schließen des Bypass-Ventils 9 führen. In jedem Falle wird ein selbsttätiges Ausregeln des Drucks p_{vT} um das Niveau p_{S} herum erreicht.

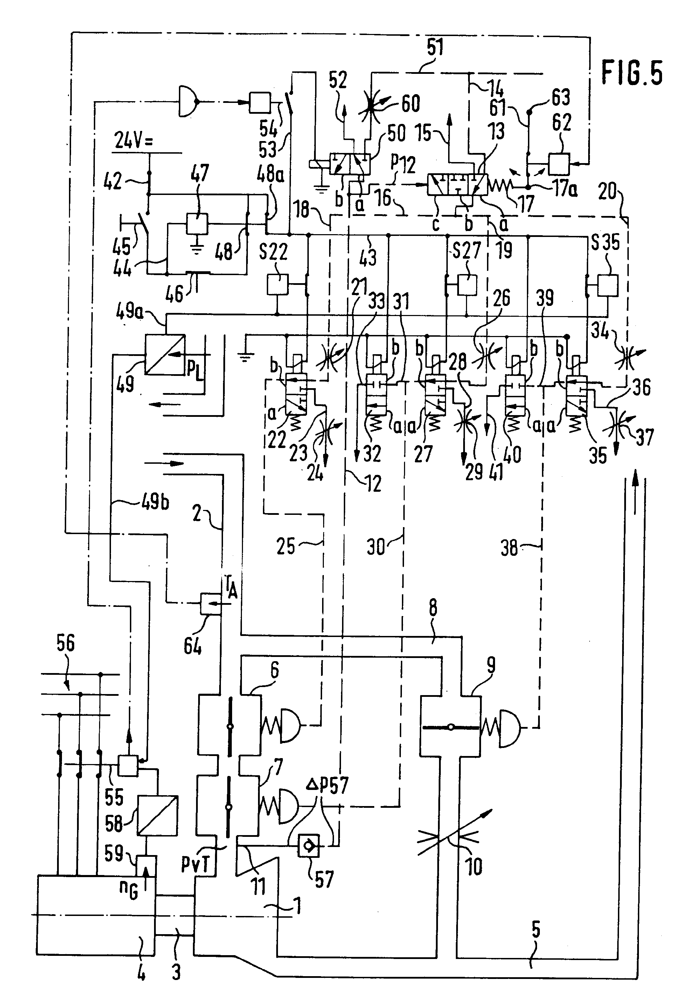

Während des Hochfahrens der Nutzturbine 1 und des Asynchrongenerators 4 wird dessen Drehzahl kontinuierlich vom Drehzahlaufnehmer 59 überwacht. Sobald die Schaltlogik 58 feststellt, daß die Generatordrehzahl n_{G} die geringfügig unter der Nenndrehzahl n_{N} liegende Schaltdrehzahl n_{S} erreicht hat, wird der Netzschalter 55 ausgelöst und der Asynchrongenerator 4 dadurch mit dem Verbrauchernetz 56 verbunden (Fig. 5). Der mit dem Netzschalter 55 gekoppelte invertierende Hilfsschalter 54 öffnet im abzweigenden Strang 53 des Steuerkreises 43, wobei der Magnetschalter des Wegeventils 50 abfällt und dieses dadurch in die Schaltposition 50 a gerät. In dieser Schaltposition wird die Staudruckleitung 12 über die Entlüftungsleitung 52 entlüftet; der abfallende Druck in der Staudruckleitung 12 läßt das Vorschalt-Wegeventil in die Schaltposition 13 a zurückfallen. Dadurch werden die Steuerleitungen 25, 30 und 38 erneut mit Steuerluft beaufschlagt. Die Absperrorgane 6, 7 öffnen langsam weiter bis zur vollständigen Öffnung, das Bypass-Ventil 9 schließt langsam weiter, bis es vollständig geschlossen ist.

Die Nutzturbine 1 wird voll von der Abgasüberschußmenge der Brennkraftmaschine beaufschlagt. Der Asynchrongenerator 4 wird dadurch auf eine Betriebs-Drehzahl n_{B} getrieben, die etwas oberhalb seiner Nenndrehzahl n_{N} liegt und gibt dabei Leistung ans Verbrauchernetz 56 ab.

Bei einer normalen Betriebsabschaltung signalisiert ein abfallender Ladedruck p_{L} am Steuergerät 49, daß nicht mehr genügend Abgasüberschuß für einen Betrieb der Nutzturbine 1 zur Verfügung steht. Daraufhin werden über die Signalleitung 49 a die Schalter S₂₂, S₂₇ und S₃₅ geöffnet, die Wegeventile 22, 27 und 35 werden in ihre Schaltposition "a" zurückversetzt. Die sich gedrosselt entleerenden Steuerleitungen 25, 30 und 38 bewirken ein langsames Schließen der Absperrorgane 6 und 7 bzw. ein langsames Öffnen des Bypass-Ventils 9. Gleichzeitig wird über die Signalleitung 49 b der Netzschalter 55 geöffnet und somit den Asynchrongenerator 4 vom Verbrauchernetz 56 getrennt. Das Öffnen der Schalter S₂₂, S₂₇ und S₃₅ für eine Betriebsabschaltung kann wahlweise auch manuell geschehen.

Bei einem Notstop, der in Abhängigkeit vom Überschreiten eines voreingestellten Betriebswertes automatisch oder manuell ausgelöst werden kann, wird der Notstop-Schalter 46 in dem die Selbsthaltung der Schalter 48 und 48 a bewirkenden Haltestromkreis 44 geöffnet; dadurch öffnen die Schalter 48 und 48 a; der Steuerkreis 43 wird spannungslos. Dadurch fallen die Magnetschalter aller Wegeventile 22, 27, 32, 35 und 40 schlagartig ab. Die Steuerleitung 25 des Absperrorgans 6 wird langsam über die Drossel 24 entlüftet; entsprechend langsam schließt das Absperrorgan 6. Die Steuerleitungen 30 und 38 werden über die Entlüftungsleitungen 33 bzw. 41 ungedrosselt entlüftet; entsprechend schnell schließt das Absperrorgan 7 und öffnet das Bypass-Ventil 9.

In einer besonders bevorzugten Ausführungsform wird neben dem Druck vor Turbine p_{vT} die Abgastemperatur T_{A} als weitere Stellgröße für die Regelung des Öffnungsquerschnitts der Absperrorgane 6, 7 und des Bypass-Ventils 9 verwendet.

Hierzu ist in der Abgaszufuhrleitung 2 ein Temperaturmesser 64 angeordnet, der eingangsseitig an eine Stellvorrichtung 62 angeschlossen ist. Die Stellvorrichtung ist ausgangsseitig an einem Hebel 61 angelenkt, der um einen festen Drehpunkt 63 schwenkbar ist. Am freien Ende des Hebels 61 stützt sich die Feder 17 mit ihrem Stützpunkt 17 a ab. Bei steigender Abgastemperatur T_{A} wird der Stützpunkt 17 a in eine zum Vorschalt-Wegeventil 13 entferntere Lage gebracht. Dadurch wird erreicht, daß das Vorschaltventil bei höherer Abgastemperatur schon bei einem niedrigeren Druck p_{vT} in die Schaltstellung "b" gerät. Eine zu schnelle Beschleunigung der Nutzturbine wird durch die daraus resultierende geringere Öffnung der Absperrorgane 6, 7 vermieden.

Mittels der erfindungsgemäßen Vorrichtung ist somit eine sichere Steuerung der gesamten Nutzturbine-Generator-Anlage in allen Betriebsbereichen gewährleistet. Durch die weitestgehend selbsttätige Zu- und Abschaltung der Anlage ist das Bedienungspersonal wesentlich entlastet.

## Patentansprüche

1. Vorrichtung zur Steuerung einer mit einem Generator (4) gekoppelten Nutzturbine (1), die für die Aufladung nicht benötigtes Abgas einer aufgeladenen Brennkraftmaschine verwertet,
- mit einer Abgaszufuhrleitung (2), die eingangsseitig mit der Nutzturbine verbunden ist und mit einer Abgasabfuhrleitung (5), die ausgangsseitig an die Nutzturbine angeschlossen ist,
- mit einer ein Bypass-Ventil (9) und eine Drossel (10) enthaltenden Bypass-Leitung (8), die unter Umgehung der Nutzturbine die Abgaszufuhrleitung (2) mit der Abgasabfuhrleitung (5) verbindet,
- mit wenigstens einem zwischen Abzweigung der Bypass-Leitung (8) und der Nutzturbine in der Abgaszufuhrleitung (2) angeordneten Absperrorgan (6,7) , dessen Stellung zu der des Bypass-Ventils (9) in Abhängigkeit steht und
- mit einem die Drehzahl der Nutzturbine oder des Generators ermittelnden Drehzahlaufnehmer (59), dadurch gekennzeichnet, daß
- in der Abgaszufuhrleitung (2) zwischen Absperrorgan (6, 7) und Nutzturbine (1) ein Druckmesser (11, 12) zur Ermittlung des Druckes vor Turbine (p_{vT}) angeordnet ist,
- daß das Absperrorgan (6, 7) mit einer Vorrichtung zur Regelung seines Öffnungsquerschnitts verbunden ist,
- daß die Vorrichtung zur Regelung des Öffnungsquerschnittes den Öffnungsquerschnitt des Absperrorgans (6, 7) in Abhängigkeit vom Druck vor Turbine (p_{vT}) derart steuert,
- daß dieses beim Anfahren der Nutzturbine (1) in einer ersten Phase zunächst kontinuierlich geöffnet wird,
- daß dieses in einer zweiten Phase bei Erreichen eines vorgewählten, einstellbaren Druckes p_{vT} = p_{S} in einer Raststellung verharrt, die eine weitere Beschleunigung des mit der Nutzturbine (1) gekoppelten Asynchrongenerators (4) auf dessen Nenndrehzahl n_{N} gewährleistet und bei der der Drehzahlanstieg dn/dt im Bereich der Nenndrehzahl n_{N} einen so geringen Wert erreicht, daß ein sicheres Zuschalten des Asynchrongenerators (4) mittels eines mit dem Drehzahlaufnehmer (59) verbundenen Netzschalters (55) gewährleistet ist und
- daß dieses in einer dritten Phase nach Schließen des Netzschalters (55) kontinuierlich weiter geöffnet wird.

2. Vorrichtung gemäß Anspruch 1, dadurch gekennzeichnet, daß in der Abgaszufuhrleitung (2) zwischen Abzweigung der Bypass-Leitung (8) und Nutzturbine (1) zwei in Reihe liegende Absperrorgane (6, 7) angeordnet sind, von denen wenigstens eines (6) bezüglich seines Öffnungsquerschnittes fein einstellbar ist und von denen wenigstens eines (7) schnell schließbar ist.

3. Vorrichtung gemäß einem der vorhergehenden Ansprüche, dadurch gekennzeichnet, daß das Bypass-Ventil (9) und die Absperrorgane (6, 7) pneumatisch mittels elektromagnetisch schaltbarer Wegeventile (22, 27, 32, 35, 40) steuerbar sind.

4. Vorrichtung gemäß Anspruch 3, dadurch gekennzeichnet, daß der an den Wegeventilen (22, 27, 35) anstehende Steuerdruck von einem Vorschalt-Wegeventil (13) geregelt wird.

5. Vorrichtung gemäß einem der vorhergehenden Ansprüche, dadurch gekennzeichnet, daß der Druckmesser (11) als Staudruckleitung (12) ausgebildet ist und der in dieser anstehende Druck die verschiedenen Schaltstellungen(13 a, b, c) des Vorschalt-Wegeventils (13) bestimmt.

6. Vorrichtung gemäß einem der vorhergehenden Ansprüche, dadurch gekennzeichnet, daß die Staudruckleitung (12) in Abhängigkeit von einem mit dem Netzschalter (55) gekoppelten invertierenden Hilfsschalter (54) mit Steuerluft beaufschlagbar ist und nahe ihrer Einmündung in die Abgaszufuhrleitung (2) ein nach dorthin durchlässiges Rückschlagventil (57) aufweist.

7. Vorrichtung nach einem der vorhergehenden Ansprüche, dadurch gekennzeichnet, daß in Entlüftungsleitungen (23, 28, 36), die an die Wegeventile (22, 27, 37) anschließen, einstellbare Drosseln (24, 29, 37) angeordnet sind.

8. Vorrichtung nach einem der vorhergehenden Ansprüche, dadurch gekennzeichnet, daß die Steuerleitungen (30, 38), die die Wegeventile (27, 35) mit dem Absperrorgan (7) bzw. dem Bypass-Ventil (9) verbinden, jeweils zusätzlich an ein weiteres Wegeventil (32, 40) angeschlossen sind, das elektromagnetisch in Abhängigkeit von einem Notstop-Schalter (46) betätigbar ist und dessen Entlüftungsleitung (33, 41) ungedrosselt ins Freie führt.

9. Vorrichtung gemäß einem der vorhergehenden Ansprüche, dadurch gekennzeichnet, daß die Temperatur des Abgases T_{A} als weitere Stellgröße für die Regelung des Öffnungsquerschnittes des Absperrorgans (6, 7) und des Bypass-Ventils (9) dient.

10. Vorrichtung gemäß Anspruch 9, dadurch gekennzeichnet, daß das Vorschalt-Wegeventil (13) entgegen dem Druck in der Staudruckleitung (12) von einer Feder (17) beaufschlagt wird, deren Abstützpunkt (17 a) an einem Hebel (61) angeordnet ist und daß der Hebel (61) mittels einer Stellvorrichtung (62) bei steigender Temperatur T_{A} derart um einen festen Drehpunkt (63) geschwenkt wird, daß der Abstützpunkt (17 a) in eine zum Vorschalt-Wegeventil (13) entferntere Lage gebracht wird.

## Claims

1. A device for controlling a useful turbine (1), coupled to a generator (4), which utilizes waste gas from a supercharged internal combustion engine, not required for supercharging,
- with a waste gas supply line (2) which is connected on the input side to the useful turbine, and with a waste gas delivery line (5) which is connected on the output side to the useful turbine,
- with a bypass line (8) containing a bypass valve (9) and a throttle (10), which, by-passing the useful turbine, connects the waste gas supply line (2) to the waste gas delivery line (5),
- with at least one shut-off device (6,7) arranged between the branch-off of the bypass line (8) and the useful turbine in the waste gas supply line (2), the setting of which device is dependent on the bypass valve (9) and
- with a rotational speed sensor (59) detecting the rotational speed of the useful turbine or of the generator, characterised in that
- in the waste gas supply line (2) between the shut-off device (6,7) and the useful turbine (1) there is arranged a pressure sensor (11,12) for detecting the pressure in front of the turbine (p_{vT}),
- in that the shut-off device (6,7) is connected to a device for controlling its opening cross-section,
- that the device for controlling the opening cross-section controls the opening cross-section of the shut-off device (6,7) in dependence on the pressure in front of the turbine (p_{vT}), in such a way that
- in a first phase the shut-off device is in the first instance continuously open when starting the useful turbine (1),
- that in a second phase when reaching a preselected adjustable pressure p_{vT} = p_{S} the shut-off device stays in a rest setting, which guarantees further acceleration of the asynchronous generator (4) coupled with the useful turbine (1) to its nominal rotational speed n_{N} and with which the increase in the rotational speed dn/dt in the region of the nominal rotational speed n_{N} reaches such a low value that a reliable switching-in of the asynchronous generator (4) by means of a mains switch (55) connected to the rotational speed sensor (59) is guaranteed and
- that the shut-off device is continuously opened further in a third phase after closing the mains switch (55).

2. A device according to claim 1, characterised in that in the waste gas supply line (2) between the branching-off of the bypass line (8) and the useful turbine (1) there are arranged two shut-off devices (6,7) lying in series, at least one (6) of which is able to be finely adjusted with regard to its opening cross-section and at least one (7) of which is able to be closed quickly.

3. A device according to one of the preceding claims, characterised in that the bypass valve (9) and the shut-off devices (6,7) are able to be controlled pneumatically by means of electromagnetically switchable directional control valves (22, 27, 32, 35, 40).

4. A device according to claim 3, characterised in that the control pressure present at the directional control valves (22, 27, 35) is controlled by a series directional control valve (13).

5. A device according to one of the preceding claims, characterised in that the pressure sensor (11) is formed as a ram pressure line (12) and the pressure present in this line determines the different switch positions (13 a,b,c) of the series directional control valve (13).

6. A device according to one of the preceding claims, characterised in that the ram pressure line (12) is able to be acted upon with control air in dependence on an inverting auxiliary switch (54) coupled to the mains switch (55) and in the vicinity of its junction into the waste gas supply line (2) has a non-return valve (57) permeable in that direction.

7. A device according to one of the preceding claims, characterised in that in the ventilating lines (23,28,36) which connect to the directional control vales (22, 27, 37), there are arranged adjustable throttles (24, 29, 37).

8. A device according to one of the preceding claims, characterised in that the control lines (30, 38) which connect the directional control valves (27, 35) to the shut-off device (7) or the bypass valve (9) are in each case connected in addition to a further directional control valve (32, 40), which is able to be activated electromagnetically in dependence on an emergency stop switch (46), and the ventilating line (33,41) of which is led, not throttled, into the open [atmosphere].

9. A device according to one of the preceding claims, characterised in that the temperature of the waste gas T_{A} serves as a further correcting variable for the control of the opening cross-section of the shut-off device (6,7) and of the bypass valve (9).

10. A device according to claim 9, characterised in that the series path valve (13) is acted upon against the pressure in the ram pressure line (12) by a spring (17), the supporting point (17a) of which is arranged on a lever (61) and in that the lever (61) is pivoted by means of an adjusting device (62) about a fixed rotary point (63) with increasing temperature T_{A} so that the supporting point (17a) is brought into a position more distant relative to the series directional control valve (13).

## Revendications

1. Dispositif pour commander une turbine utile (1) couplée à un générateur (4) et qui est utilisée pour la suralimentation de gaz d'échappement non nécessaires d'un moteur à combustion interne à suralimentation, comportant
- un conduit (2) d'amenée des gaz d'échappement, qui est raccordé au côté entrée de la turbine utile, et un conduit (5) d'évacuation des gaz d'échappement, qui est raccordé au côté sortie de la turbine utile,
- un conduit de dérivation, qui contient une soupape de dérivation (9) et un dispositif d'étranglement (10) et raccorde le conduit (2) d'amenée des gaz d'échappement au conduit (5) d'évacuation des gaz d'échappement, en contournant la turbine utile,
- au moins un organe de blocage (6,7), qui est disposé entre un embranchement du conduit de dérivation (8) et la turbine utile dans le conduit (2) d'amenée des gaz d'échappement et dont la position dépend de celle de la soupape de dérivation (9), et
- un capteur (59) de la vitesse de rotation, qui détermine la vitesse de rotation de la turbine utile ou du générateur,
caractérisé en ce
- qu'un manomètre (11,12) est disposé dans le conduit (2) d'amenée des gaz d'échappement entre l'organe de blocage (6,7) et la turbine utile (1), pour déterminer la pression (p_{vT}) en amont de la turbine,
- que l'organe de blocage (6,7) est raccordé à un dispositif pour régler sa section transversale d'ouverture,
- que le dispositif de régulation de la section transversale d'ouverture commande la section transversale d'ouverture de l'organe de blocage (6,7) en fonction de la pression (p_{vT}) en amont de la turbine,
- que, lors du démarrage de la turbine utile (1), cet organe de blocage est ouvert tout d'abord continûment lors d'une première phase,
- que, lors d'une seconde phase, une fois qu'est atteinte une pression présélectionnée et réglable p_{vT} = p_{S}, cet organe de blocage est maintenu dans une position encliqueté, qui garantit une accélération ultérieure du générateur asynchrone (4) couplé à la turbine utile (1), jusqu'à sa vitesse de rotation nominale n_{N} et dans laquelle l'accroissement dn/dt de la vitesse de rotation atteint, au voisinage de la vitesse de rotation nominale n_{N}, une valeur suffisamment faible pour qu'un raccordement sûr du générateur asynchrone (4) soit garanti au moyen d'un interrupteur (55) de raccordement au réseau, qui est relié au capteur (59) de la vitesse de rotation, et
- que, lors d'une troisième phase, cet organe de blocage continue à être ouverte continûment après la fermeture de l'interrupteur (55) de raccordement au réseau.

2. Dispositif selon la revendication 1, caractérisé en ce que dans le conduit (2) d'évacuation des gaz d'échappement, entre l'embranchement du conduit de dérivation (8) et la turbine utile (1) sont disposés en série deux organes de blocage (6,7), la section transversale d'ouverture d'au moins l'un d'eux (6) pouvant être réglée de façon précise, et l'un au moins (7) de ces organes de blocage pouvant être fermé rapidement.

3. Dispositif selon l'une des revendications précédentes, caractérisé en ce que la soupape de dérivation (9) et les organes de blocage (6,7) peuvent être commandés pneumatiquement au moyen de distributeurs (22,27,32,35,40) pouvant être commutés par voie électromagnétique.

4. Dispositif selon la revendication 3, caractérisé en ce que la pression de commande appliquée aux distributeurs (22,27,35) est réglée par un distributeur additionnel (13).

5. Dispositif selon l'une des revendications précédentes, caractérisé en ce que le manomètre (11) est réalisé sous la forme d'un conduit de pression de refoulement (12) et que la pression, qui règne dans ce conduit, détermine les différentes positions de commutation (13a, b, c) du distributeur additionnel (13).

6. Dispositif selon l'une des revendications précédentes, caractérisé en ce que le conduit de pression de refoulement (12) peut être chargé par un air de commande, en fonction d'un interrupteur auxiliaire inverseur (54) couplé à l'interrupteur (55) de raccordement au réseau, et possède, à proximité de l'endroit où il débouche dans le conduit (2) d'amenée des gaz d'échappement, une soupape antiretour (57) qui est passante en direction du conduit d'amenée des gaz d'échappement.

7. Dispositif selon l'une des revendications précédentes, caractérisé en ce que des dispositifs d'étranglement réglables (24,29,37) sont disposés dans des conduits de désaération (23,28,36), qui sont raccordés aux distributeurs (22,27,37).

8. Dispositif selon l'une des revendications précédentes, caractérisé en ce que les conduits de commande (30,38), qui raccordent les distributeurs (27,35) à l'organe de blocage (7) ou à la soupape de dérivation (9), sont raccordés chacun en outre à un autre distributeur (32,40), qui peut être actionné par voie électromagnétique en fonction d'un interrupteur d'arrêt d'urgence (46) et dont le conduit de désaération (33,41) débouche à l'air libre, sans aucun dispositif d'étranglement.

9. Dispositif selon l'une des revendications précédentes, caractérisé en ce que la température Tₐ des gaz d'échappement est utilisée comme autre grandeur pour la régulation de la section transversale d'ouverture de l'organe de blocage (6,7) et de la soupape de dérivation (9).

10. Dispositif selon la revendication 9, caractérisé en ce que le distributeur additionnel (13) est chargé, à l'encontre de la pression régnant dans le conduit de pression de refoulement (12), par un ressort (17), dont le point d'appui (17 a) est situé sur un levier (61), et que le levier (61) pivote, sous l'action d'un dispositif de réglage (62), lorsque la température T_{A} augmente, autour d'un centre fixe de rotation (63) de telle sorte que le point d'appui (17 a) est amené dans une position plus éloignée par rapport au distributeur additionnel (13).
